# EUROPÄISCHE PATENTSCHRIFT

(11) **EP 2 994 675 B1**
(45) Veröffentlichungstag und Bekanntmachung des Hinweises auf die Patenterteilung: **31.08.2016**
(21) Anmeldenummer: 13736774.4
(22) Anmeldetag: 05.07.2013
(51) Int. Cl.: F16K 11/07, F15B 13/04

(54) **VENTIL**
VALVE
VANNE

(43) Veröffentlichungstag der Anmeldung: 16.03.2016
(73) Patentinhaber: Festo AG & Co. KG, 73734 Esslingen (DE)
(72) Erfinder: BERNER, Michael, 73230 Kirchheim (DE); RÄPKE, Falk, 73760 Ostfildern (DE)
(74) Vertreter: Patentanwälte Magenbauer & Kollegen Partnerschaft mbB
(86) Internationale Anmeldenummer: PCT/EP2013/001978
(87) Internationale Veröffentlichungsnummer: WO 2015/000496

(56) Entgegenhaltungen:
- EP-A1- 0 475 070
- DE-A1- 19 603 719

## Beschreibung

Die Erfindung betrifft ein Ventil, mit einem Ventilgehäuse und einem kolbenartigen Ventilschieber, der in einer eine mittige Längsachse aufweisenden Ausnehmung des Ventilgehäuses unter Ausführung linearer Umschaltbewegungen zwischen verschiedenen Arbeitspositionen axial verschiebbar angeordnet ist, und ferner mit mindestens einem den Ventilschieber in der Ausnehmung koaxial umschließenden Dichtungsring, der über ein ortsfest bezüglich des Ventilgehäuses fixiertes mehrteiliges ringförmiges Dichtungsgehäuse mit U-förmigem Querschnitt und zwei sich gegenüberliegenden, durch einen radial außen liegenden ringförmigen Bodenabschnitt miteinander verbundenen Gehäuseschenkeln verfügt, wobei mindestens einer der beiden Gehäuseschenkel als bezüglich des Bodenabschnittes separater, in einem Fügebereich an dem Bodenabschnitt befestigter Körper ausgebildet ist, wobei das Dichtungsgehäuse einen Aufnahmeraum umgrenzt, der radial innen eine seitlich von den beiden Gehäuseschenkeln flankierte schlitzartige Gehäuseöffnung aufweist und in dem koaxial ein ringförmiges Dichtelement angeordnet ist, das einerseits zum statisch abdichtenden Zusammenwirken mit der Innenfläche des Dichtungsgehäuses und andererseits zum dynamisch abdichtenden Zusammenwirken mit der Außenumfangsfläche des Ventilschiebers ausgebildet ist, wobei das Dichtelement für die dynamische Abdichtung einen im Bereich der schlitzartigen Gehäuseöffnung angeordneten dynamischen Dichtabschnitt aufweist, der den Ventilschieber in mindestens einer seiner Arbeitspositionen mit Dichtkontakt koaxial umschließt.

Ein aus der EP 0 475 070 A1 bekanntes Ventil dieser Art ist mit mehreren koaxial aufeinanderfolgend in einer Ausnehmung eines Ventilgehäuses angeordneten Dichtungsringen ausgestattet, die jeweils ein im Querschnitt U-förmiges mehrteiliges Dichtungsgehäuse enthalten, dessen U-Öffnung eine nach radial innen orientierte Gehäuseöffnung definiert. Jedes Dichtungsgehäuse begrenzt einen Aufnahmeraum, in dem ein aus einem Elastomermaterial bestehendes Dichtelement angeordnet ist, das mit einem dynamischen Dichtabschnitt durch die Gehäuseöffnung hindurchragt und dynamisch dichtend mit der Außenumfangsfläche eines verschiebbar in der Ausnehmung des Ventilgehäuses angeordneten Ventilschiebers in Dichtkontakt steht. Der Ventilschieber kann durch Ausführung linearer Umschaltbewegungen zwischen verschiedenen Arbeitspositionen umgeschaltet werden, in denen er im Ventilgehäuse verlaufende Ventilkanäle in unterschiedlichem Muster voneinander abtrennt bzw. miteinander verbindet.

Der mehrteilige Aufbau des Dichtungsgehäuses erleichtert den Zusammenbau des Dichtungsringes. In diesem Zusammenhang sind die beiden Gehäuseschenkel des Dichtungsgehäuses als bezüglich eines ringförmigen Bodenabschnittes des Dichtungsgehäuses separate Körper ausgebildet und durch eine Schnappverbindung oder eine Einpressverbindung an dem Bodenabschnitt fixiert. Damit das Dichtelement im Innern des Aufnahmeraumes nicht von dem abzudichtenden Fluid umströmt werden kann, insbesondere wenn der Fügebereich zwischen dem Bodenabschnitt und einem diesbezüglich separaten Gehäuseschenkel nicht hermetisch abgedichtet ist, muss das Dichtelement so ausgebildet sein, dass es ständig mit einer gewissen Vorspannung an die radial nach innen weisende Innenumfangsfläche des Bodenabschnittes angepresst wird. Auf diese Weise wird zugleich eine allseitige radiale Abstützung des Dichtelementes erzielt, die bei dem bekannten Ventil angestrebt ist, damit das Dichtelement mit seinem dynamischen Dichtabschnitt auch eine Querabstützung des Ventilschiebers zum Erhalt einer exakten Linearführung des Ventilschiebers bewirkt. Dies allerdings geht zu Lasten der Leichtgängigkeit des Ventilschiebers, so dass die Umschaltgeschwindigkeit beeinträchtigt wird und relativ hohe Antriebskräfte mit entsprechend hohem Energiebedarf notwendig sind, um das Ventil zu betätigen.

Einer vergleichbaren Problematik unterliegt ein aus der EP 0 472 910 A1 bekanntes Ventil.

Im Falle eines in der DE 196 03 719 A1 offenbarten Ventils verfügt der Dichtungsring über ein einstückiges Dichtungsgehäuse, so dass das Thema der Abdichtung zwischen den Gehäuseschenkeln und dem Bodenabschnitt nicht auftritt. Allerdings ist der Herstellungsprozess des einstückigen Dichtungsgehäuses durch Materialumformung relativ aufwendig. Außerdem ist das in dem Dichtungsgehäuse aufgenommene Dichtelement von dem Dichtungsgehäuse radial abgestützt, so dass wiederum eine hohe Flächenpressung zwischen diesem Dichtelement und dem Ventilschieber auftritt.

Aus der EP 1 847 736 B1 geht eine Dichtungsanordnung hervor, die über einen zwei Maschinenelemente gegeneinander abdichtenden Dichtungsring verfügt, der in eine Einbaunut des einen Maschinenelementes eingesetzt ist. Innerhalb dieser Einbaunut bewirkt der Dichtring eine statische Abdichtung. Der aus der Einbaunut herausragende Dichtungsabschnitt liegt dynamisch dichtend am diesbezüglich beweglichen anderen Maschinenelement an.

Der Erfindung liegt die Aufgabe zugrunde, ein Ventil der eingangs genannten Art so zu modifizieren, dass sein mindestens einer Dichtungsring eine zuverlässige Dichtfunktion in Verbindung mit einem einfachen Aufbau erfüllt.

Diese Aufgabe wird in Verbindung mit den eingangs genannten Merkmalen dadurch gelöst, dass im Innern des Aufnahmeraums des Dichtungsgehäuses in der radial nach innen weisenden Innenumfangsfläche des Bodenabschnittes eine nach radial innen hin offene, als Ringnut gestaltete Abdichtungsnut ausgebildet ist, in die das Dichtelement mit einem radial außen angeordneten statischen Dichtabschnitt eintaucht, der zum statisch abdichtenden axialen Zusammenwirken mit den beiden sich in dem Bodenabschnitt gegenüberliegenden Nutflanken der Abdichtungsnut ausgebildet ist.

Auf diese Weise erübrigt sich eine fluiddichte Ausgestaltung des zwischen dem Bodenabschnitt und jedes daran befestigten separaten Gehäuseschenkels des Dichtungsgehäuses vorhandenen Fügebereiches. Indem das Dichtelement mit seinem dynamischen Dichtabschnitt am Ventilschieber anliegt und außerdem mit seinem statischen Dichtabschnitt an wenigstens einer Nutflanke der Abdichtungsnut anliegt, bewirkt das Dichtelement eine fluiddichte Sperre zwischen den beiden Gehäuseschenkeln und trennt insbesondere den auf der einen Seite des Dichtelementes liegenden Fügebereich von der anderen Seite des Dichtelementes fluiddicht ab. Selbst wenn daher durch einen nicht abgedichteten Fügebereich hindurch ein in der Ausnehmung des Ventilgehäuses befindliches Fluid in den Aufnahmeraum des Dichtungsgehäuses eindringen sollte, kann dieses nicht auf die axial entgegengesetzte Seite des Dichtelementes überströmen. Somit ist die volle Funktion des Dichtelementes bei kostengünstiger Ausgestaltung des Fügebereiches gewährleistet. Man erspart sich insbesondere auch zeit- und kostenaufwendige Dichtheitsprüfungen bezüglich des mindestens einen Fügebereiches.

Dadurch, dass der statische Dichtabschnitt mit den Nutflanken der Abdichtungsnut zusammenwirkt, erübrigt sich eine Abdichtung bezüglich des Nutgrundes dieser Abdichtungsnut. Somit besteht die Möglichkeit, zwischen dem Dichtelement und dem Nutgrund der Abdichtungsnut einen freien Zwischenraum zu belassen, der dem Dichtelement eine gewisse radiale Beweglichkeit gewährleistet ohne radial komprimiert zu werden. Auf diese Weise kann die radiale Vorspannung des Dichtelementes bezüglich des Ventilschiebers auf ein die gewünschte Abdichtung gewährleistetes minimales Niveau reduziert werden, was leichtgängige Umschaltbewegungen des Ventilschiebers gestattet.

Vorteilhafte Weiterbildungen der Erfindung gehen aus den Unteransprüchen hervor.

Zweckmäßigerweise ist jeder Gehäuseschenkel als bezüglich des Bodenabschnittes separater Körper ausgebildet, der in einem eigenen Fügebereich an dem Bodenabschnitt befestigt ist. Die Abdichtungsnut liegt zwischen den beiden Fügebereichen, so dass sie in beiden Richtungen abdichtet.

Von Vorteil ist es, wenn der Dichtungsring an den einander axialen entgegengesetzten Seitenflächen seines statischen Dichtabschnittes jeweils mindesten einen erhaben gestalteten Dichtbereich aufweist, der mit hoher Flächenpressung an der zugeordneten Nutflanke der Abdichtungsnut anliegen kann. Ein solcher Dichtbereich ist beispielsweise als konzentrisch zur Längsachse des Dichtelementes ausgebildeter Dichtwulst oder als wiederum konzentrisch zur Längsachse des Dichtelementes ausgebildete Dichtkante realisiert. Die Dichtkante resultiert beispielsweise aus einer bezüglich einer Radialebene geneigten Seitenfläche des statischen Dichtabschnittes.

Zur Fixierung am Bodenabschnitt ist jeder als separater Körper ausgebildete ringförmige Gehäuseschenkel zweckmäßigerweise in eine an der axialen Außenfläche des ringförmigen Bodenabschnittes ausgebildete Fügenut eingesetzt, wobei er darin insbesondere durch plastische Verformung der Halteabschnitte des Bodenabschnittes fixiert ist. Diese Halteabschnitte können insbesondere durch ein lokales Verstemmen des Bodenabschnittes realisiert werden.

Als besonders vorteilhaft wird es angesehen, wenn der statische Dichtabschnitt eine geringere Breite hat als die Abdichtungsnut, wobei der Dichtungsring axial beweglich im Dichtungsgehäuse angeordnet ist, so dass er durch den ihn im Betrieb axial beaufschlagenden Fluiddruck an die auf der jeweils anderen Seite liegende Nutflanke der Abdichtungsnut unter Abdichtung axial angedrückt wird. Auf diese Weise kann das Dichtelement in gewissen Grenzen frei beweglich in dem Dichtungsgehäuse aufgenommen sein, so dass es sich optimal an die bezüglich des Ventilgehäuses eingenommene Querposition des Ventilschiebers anpassen kann, wobei dennoch die statische Abdichtfunktion zwischen dem Dichtelement und den beiden Nutflanken der Abdichtungsnut gewährleistet ist.

Das Dichtelement ist zweckmäßigerweise mit mindestens einem axial abstehenden Sicherungsvorsprung ausgestattet, der in eine axiale Sicherungsaussparung eingreift, die seitlich an der Innenfläche des Dichtungsgehäuses ausgebildet ist. Ein solcher Sicherungsvorsprung sichert das Dichtelement gegen ein radiales Herausziehen aus dem Aufnahmeraum des Dichtungsgehäuses, insbesondere in Verbindung mit einer durch Druckdifferenzen hervorgerufenen Sogwirkung.

Von Vorteil ist es, wenn das Dichtelement an seinen einander axialen entgegensetzten Seitenflächen jeweils einen solchen Sicherungsvorsprung aufweist, wobei das Dichtungsgehäuse an den Innenflächen seiner beiden Gehäuseschenkel jeweils eine axiale Sicherungsaussparung aufweist, in die der zugeordnete Sicherungsvorsprung eintaucht. Vorzugsweise ist jeder Sicherungsvorsprung und jede Sicherungsaussparung ringförmig ausgebildet.

Auf gesonderte Sicherungsvorsprünge und Sicherungsaussparungen kann verzichtet werden, wenn der mindestens eine Sicherungsvorsprung unmittelbar von dem sowieso vorhandenen statischen Dichtabschnitt gebildet ist, wobei zweckmäßigerweise zumindest ein Abschnitt jeder Sicherungsaussparung von der Abdichtungsnut gebildet ist

Alternativ kann allerdings der mindestens eine Sicherungsvorsprung auch unabhängig von dem statischen Dichtabschnitt vorgesehen sein, wobei er mit radialem Abstand zu dem statischen Dichtabschnitt angeordnet ist und näher bei der Gehäuseöffnung des Aufnahmeraumes des Dichtungsgehäuses liegt. Diese Bauform hat den Vorteil, dass der statische Dichtabschnitt und der Sicherungsvorsprung unabhängig voneinander hinsichtlich ihres jeweiligen Verwendungszweckes optimal gestaltet werden können.

Zweckmäßigerweise sind in der Ausnehmung des Ventilgehäuses mehrere den Ventilschieber umschließende Dichtungsringe mit axialem Abstand zueinander angeordnet.

Die Dichtungsringe sind bevorzugt unabhängig voneinander am Ventilgehäuse befestigt. Vorzugsweise ist jeder Dichtungsring dadurch fixiert, dass er mit seinem Dichtungsgehäuse unter gleichzeitiger Abdichtung in die Ausnehmung des Ventilgehäuses eingepresst ist und darin im Presssitz fixiert ist.

Wie schon erwähnt, ist es vorteilhaft, wenn zumindest der ringförmige Dichtabschnitt und vorzugsweise das gesamte Dichtelement rechtwinkelig zur Längsachse des Dichtungsringes relativ zum Dichtungsgehäuse schwimmend beweglich ist. Dadurch kann das Dichtelement den Ventilschieber unabhängig von eventuellen minimalen Querbewegungen desselben stets zuverlässig ringsum mit Dichtkontakt umgreifen.

Bei einer vorteilhaften Weiterbildung des Ventils ist mindestens einer der Gehäuseschenkel des Dichtungsgehäuses als ein Führungsschenkel ausgebildet, der über mindestens eine nach radial innen weisende Führungsfläche verfügt, die durch unmittelbaren Kontakt mit der Außenumfangsfläche des Ventilschiebers eine vom zugeordneten Dichtelement unabhängige Querabstützung und lineare Verschiebeführung des Ventilschiebers bewirkt. Um Verkantungen bestmöglich zu vermeiden, ist es zweckmäßig, wenn nur ein einziger der beiden Gehäuseschenkel des Dichtungsgehäuses als Führungsschenkel ausgebildet ist.

Vorzugsweise setzt sich die Führungsfläche aus mehreren mit Abstand zueinander rings um den Ventilschieber herum verteilt angeordneten Führungsflächenabschnitten zusammen. Auf diese Weise wird der Kontaktbereich zwischen der Führungsfläche und der Außenumfangsfläche des Ventilschiebers größenmäßig auf ein Minimum verringert.

Nachfolgend wird die Erfindung anhand der beiliegenden Zeichnung näher erläutert. In dieser zeigen:
- Figur 1: einen Längsschnitt durch eine bevorzugte Ausführungsform des erfindungsgemäßen Ventils, wobei stirnseitig angeordnete Abschlusskörper und zur Betätigung des Ventils dienende Antriebsmittel nur strichpunktiert angedeutet sind,

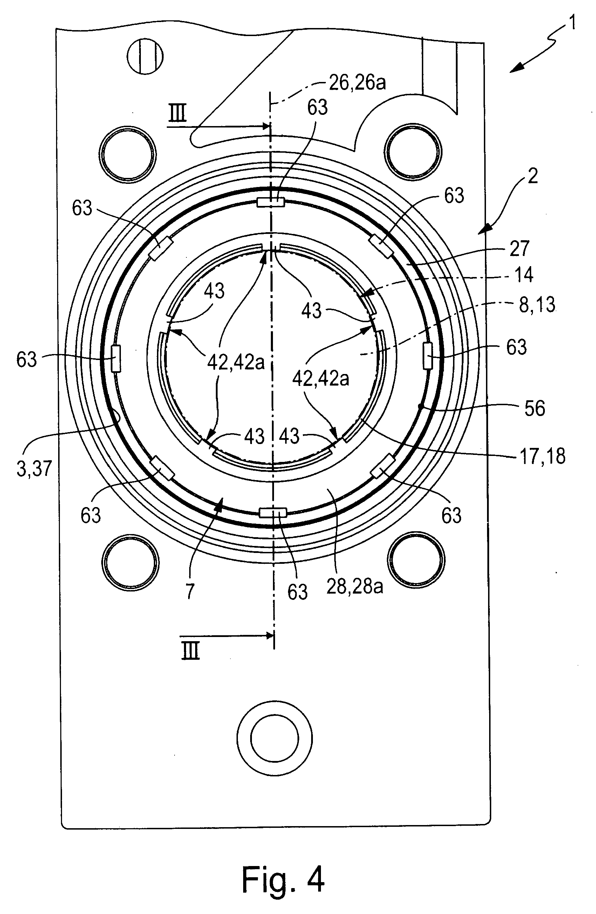

- Figur 2: den in Figur 1 strichpunktiert umrahmten, im Bereich eines Dichtungsringes liegenden Bereich in einer vergrößerten Darstellung, wobei ein Ausschnitt des Dichtungsringes auch nochmals gesondert illustriert ist und wobei die Schnittebene des Dichtungsringes entsprechend III-III aus Figur 4 verläuft,
- Figur 3: in einer der Figur 2 entsprechenden Darstellungsweise einen Ausschnitt eines Ventils mit einer alternativen Bauform eines Dichtungsringes,
- Figur 4: eine Stirnansicht des Ventils mit axialem Blick auf einen der Dichtungsringe in einer Blickrichtung gemäß Pfeil IV aus Figuren 1 und 2, wobei der Ventilschieber wie auch in Figuren 2 und 3 nur strichpunktiert angedeutet ist,

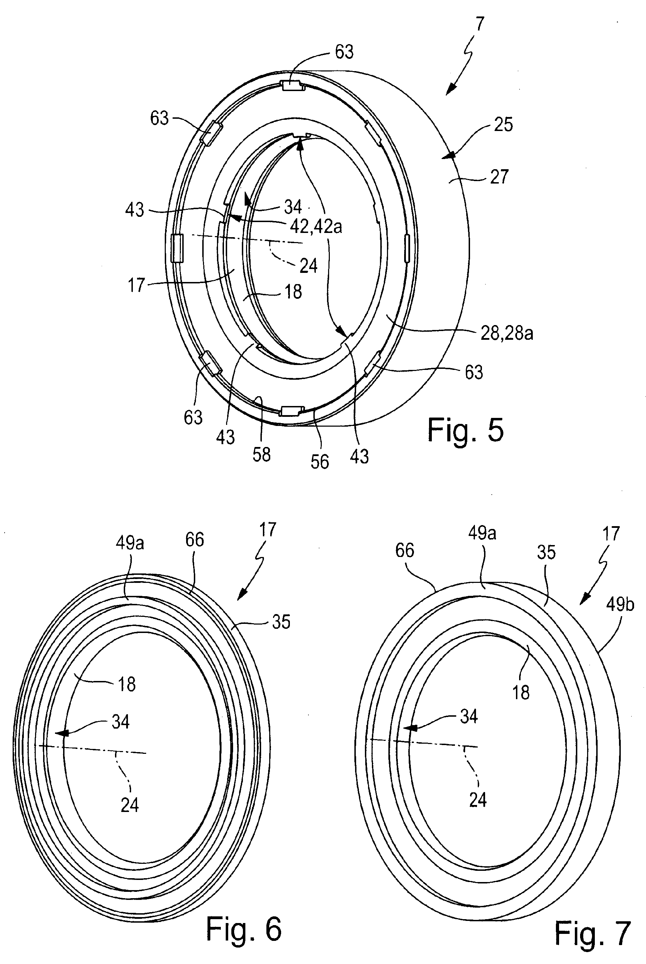

- Figur 5: eine perspektivische Einzeldarstellung eines Dichtungsringes,
- Figur 6: eine perspektivische Einzeldarstellung des bei dem Dichtungsring gemäß Figur 2 vorhandenen ringförmigen Dichtelementes, und
- Figur 7: eine perspektivische Einzeldarstellung des bei dem Dichtungsring gemäß Figur 3 vorhandenen ringförmigen Dichtelementes.

Die nachfolgenden Ausführungen gelten, sofern keine anderen Angaben gemacht werden, für alle Ausführungsbeispiele.

Das in seiner Gesamtheit mit Bezugsziffer 1 bezeichnete Ventil hat bevorzugt einen Aufbau als Mehrwegeventil und verfügt über ein Ventilgehäuse 2, in dem eine eine lineare Erstreckung aufweisende, bevorzugt zylindrisch konturierte Ausnehmung 3 ausgebildet ist. Die Ausnehmung 3 hat eine imaginäre mittige Längsachse 4, die strichpunktiert angedeutet ist.

In die Ausnehmung 3 münden peripher, an axial zueinander beabstandeten Stellen, mehrere das Ventilgehäuse 2 durchsetzende Ventilkanäle 5. Zwischen den mit jeweils einem der Ventilkanäle 5 kommunizierenden Ausnehmungsabschnitten 6 der Ausnehmung 3 ist jeweils ein über einen besonderen Aufbau verfügender Dichtungsring 7 in der Ausnehmung 3 platziert, auf dessen Aufbau weiter unten noch eingegangen wird. Jedenfalls sind bevorzugt mehrere Dichtungsringe 7 mit koaxialer Anordnung und mit gegenseitigem axialem Abstand in der Ausnehmung 3 angeordnet.

Zweckmäßigerweise ist jeder der beiden axial außen liegenden Ausnehmungsabschnitte 6 an seiner axialen Außenseite ebenfalls von einem Dichtungsring 7 flankiert.

In der Ausnehmung 3 erstreckt sich koaxial ein kolbenartig ausgebildeter Ventilschieber 8. Dieser Ventilschieber 8 erstreckt sich koaxial durch die mehreren Dichtungsringe 7 hindurch. Er hat eine mit der Längsachse 4 der Ausnehmung 3 zusammenfallende Längsachse 12.

Der Ventilschieber 8 hat mindestens einen und bevorzugt mehrere mit axialem Abstand zueinander angeordnete Steuerabschnitte 13, die jeweils eine radial orientierte Außenumfangsfläche 14 des Ventilschiebers 8 definieren. Zwischen axial benachbarten Steuerabschnitten 13 erstreckt sich jeweils ein Stegabschnitt 15 mit bezüglich der Steuerabschnitte 13 geringeren Querschnittes. Durch gesteuerte Auferlegung von Antriebskräften kann der Ventilschieber 8 zu durch einen Doppelpfeil angedeuteten linearen Umschaltbewegungen 16 in der einen oder anderen axialen Richtung veranlasst werden, um ihn in bezüglich des Ventilgehäuses 2 und den Dichtungsringen 7 unterschiedliche Arbeitspositionen zu verbringen, in denen die Ventilkanäle 5 in unterschiedlichem Muster miteinander verbunden bzw. voneinander fluiddicht abgetrennt sind.

Konkret ergibt sich eine Fluidverbindung zwischen zwei Ventilkanälen 5 stets dann, wenn derjenige Dichtungsring 7, der zwischen den mit den betreffenden Ventilkanälen 5 verbundenen Ausnehmungsabschnitten 6 angeordnet ist, von einem Stegabschnitt 15 des Ventilschiebers 8 durchsetzt wird. Da der Stegabschnitt 15 einen kleineren Querschnitt hat als der vom Dichtungsring 7 umgrenzte Innenquerschnitt, ergibt sich ein ringförmiger Überströmspalt, der einem Fluid zum Überströmen zwischen den Ventilkanälen 5 zur Verfügung steht.

Die Verbindung zwischen zwei benachbarten Ventilkanälen 5 ist dann fluiddicht abgesperrt, wenn durch entsprechende Positionierung des Ventilschiebers 8 einer der Steuerabschnitte 13 eine den betreffenden Dichtungsring 7 durchsetzende Position einnimmmt. In diesem Fall liegt der Dichtungsring 7 mit einem zu ihm gehörenden ringförmigen Dichtelement 17 an der Außenumfangsfläche 14 des betreffenden Steuerabschnittes 17 konzentrisch ringsum mit Dichtkontakt an.

Während eines Umschaltvorganges gleitet der Ventilschieber 8 mit seinem mindestens einen Steuerabschnitt 13 an mindestens einem ringförmigen Dichtelement 17 entlang, bis er die gewünschte Arbeitsposition erreicht hat. Da sich mithin der Ventilschieber 8 bezüglich des ihn abdichtenden Dichtelementes 17 axial bewegen kann, sei der konkret mit der Außenumfangsfläche 14 in Dichtkontakt stehende Abschnitt des ringförmigen Dichtelementes 17 als dynamischer Dichtabschnitt 18 bezeichnet.

Das Ventilgehäuse 2 kann an einer oder an beiden Stirnseiten jeweils über einen bevorzugt lösbar angeordneten Abschlusskörper 22 verfügen. Jeder Abschlusskörper 22 begrenzt die Ausnehmung 3 an einer ihrer beiden Stirnseiten. Die Ausnehmung 3 kann sich ohne weiteres in die beiden Abschlusskörper 22 hinein erstrecken.

Das Ventil 1 ist zweckmäßigerweise mit Antriebsmitteln 23 ausgestattet, die eine gesteuerte Auferlegung von Antriebskräften auf den Ventilschieber 8 zum Hervorrufen der Umschaltbewegung 16 ermöglichen. Vorzugsweise sind diese Antriebsmittel 23 von mindestens einer elektrisch betätigbaren Vorsteuerventileinrichtung 23a, 23b gebildet, die insbesondere ein Magnetventil oder ein andersartiges, elektrisch betätigbares Ventil beinhaltet. Hier kann durch elektrische Aktivierung eine Fluidbeaufschlagung des Ventilschiebers 8 in der einen und/oder anderen axialen Richtung hervorgerufen werden, um ihn in der Ausnehmung 3 axial zu verschieben. Bei dem Antriebsfluid handelt es sich insbesondere um Druckluft.

Das Ventil 1 kann aber beispielsweise auch direkt elektrisch betätigbar ausgeführt sein, wobei die Antriebsmittel 23 elektromechanischer, elektromagnetischer und/oder elektrodynamischer Art sind, so dass sie bei Bestromung eine prinzipbedingt erzeugte Antriebskraft auf den Ventilschieber 8 ausüben.

Das Ventil 1 des Ausführungsbeispiels ist als 5/2-Wegeventil konzipiert, wobei es fünf Ventilkanäle 5 aufweist, die durch zwei unterschiedliche Arbeitspositionen des Ventilschiebers 8 unterschiedlich miteinander verknüpfbar sind. Ein Ventilkanal 5 ist dabei ein mit einer externen Druckquelle verbindbarer Speisekanal 5a, während zwei weitere Ventilkanäle 5 als mit einem Verbraucher verbindbare Arbeitskanäle 5b, 5c ausgebildet sind und erneut zwei weitere Ventilkanäle 5 als Entlastungskanäle 5d, 5e fungieren, die mit einer Drucksenke und insbesondere mit der Atmosphäre verbunden sind. In jeder der beiden Schaltstellungen ist der Speisekanal 5a mit einem gleichzeitig von den Entlastungskanälen abgetrennten Arbeitskanal 5b oder 5c verbunden, während der andere Arbeitskanal 5c bzw. 5b unter Abtrennung vom Speisekanal 5a mit einem der Entlastungskanäle 5d oder 5e verbunden ist.

Die erfindungsgemäße Ausgestaltung lässt sich allerdings auch bei Ventilen mit anderer Funktionalität einsetzen, beispielsweise bei 2/2-Wegeventilen oder bei 3/2-Wegeventilen. Weiterhin eignet sich das erfindungsgemäße Prinzip sowohl für Schaltventile als auch für Proportionalventile.

Die Anzahl der im Ventil 1 verbauten Dichtungsringe 7 hängt insbesondere vom zugeordneten Ventiltyp ab. So könnte beispielsweise ein 2/2-Wegeventil mit nur einem Dichtungsring 7 ausgestattet sein.

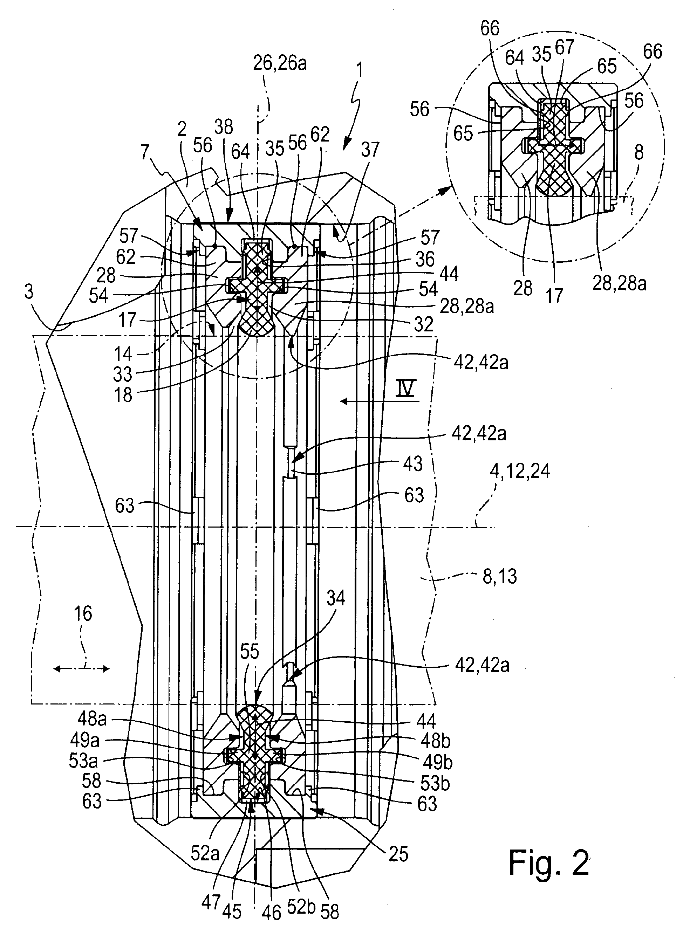

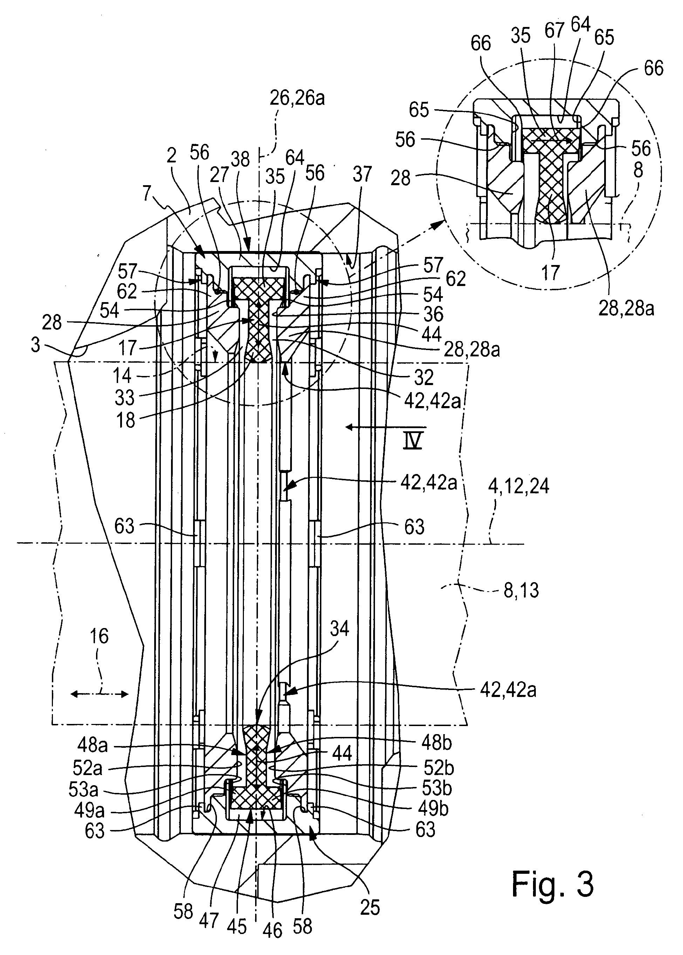

Die Dichtungsringe 7 des Ventils 1 sind untereinander identisch ausgebildet, so dass sich die Detailbeschreibung an einem der Dichtungsringe 7 orientieren kann. Beim Ausführungsbeispiel ist das Ventil 1 mit Dichtungsringen 7 gemäß Figur 2 ausgestattet, kann jedoch ohne weiteres alternativ auch mit Dichtungsringen 7 gemäß Figur 3 ausgestattet sein. Eine Mischung beider Arten von Dichtungsringen 7 ist prinzipiell ebenfalls möglich.

Der Dichtungsring 7 hat eine Längsachse 24, die im in der Ausnehmung 3 montierten Zustand mit der Längsachse 4 der Ausnehmung 3 zusammenfällt.

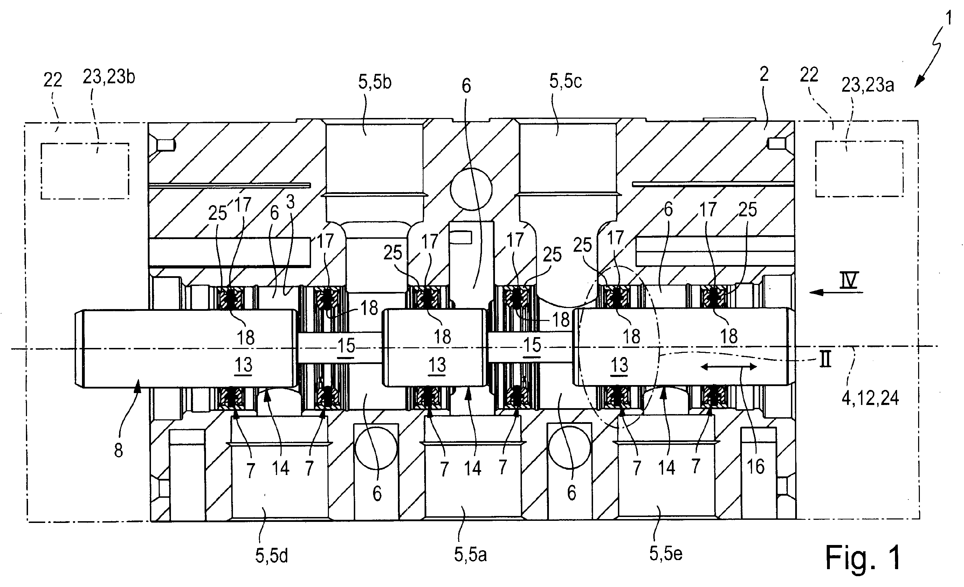

Der Dichtungsring 7 verfügt über ein zu der Längsachse 24 koaxiales ringförmiges Dichtungsgehäuse 25, das bevorzugt eine starre Struktur hat und das über einen zumindest im Wesentlichen U-förmigen Querschnitt verfügt. Dieser Querschnitt ergibt sich bei einer Schnittebene, die durch die Längsachse 24 und eine hierzu rechtwinkelige Radialachse 26 aufgespannt wird. Dieser Querschnitt ist in Figuren 1 bis 3 ersichtlich. Das Dichtungsgehäuse 25 kann beispielsweise aus Kunststoffmaterial oder aus Metall oder aus einem Verbundmaterial bestehen.

Der Dichtungsring 7 ist so angeordnet, dass die U-Öffnung seines Querschnittes radial nach innen weist und der Längsachse 24 zugewandt ist. Dementsprechend hat das Dichtungsgehäuse 25 einen radial außerhalb der U-Öffnung liegenden ringförmigen Bodenabschnitt 27 und zwei sich in der axialen Richtung des Dichtungsringes 7 mit Abstand gegenüberliegende Gehäuseschenkel 28, die sich jeweils rings um die Längsachse 24 herum erstrecken und ausgehend von dem Bodenabschnitt 27 nach radial innen ragen. Gemeinsam begrenzen die beiden Gehäuseschenkel 28 und der die beiden Gehäuseschenkel 28 im radial außen liegenden Bereich verbindende Bodenabschnitt 27 einen als Aufnahmeraum 32 bezeichneten Ringraum, der mit einer von der U-Öffnung definierten schlitzförmigen Gehäuseöffnung 33 nach radial innen in Richtung zu der Längsachse 24 offen ist. Die Gehäuseöffnung 33 erstreckt sich ringförmig um die Längsachse 24 herum.

Die beiden Gehäuseschenkel 28 haben zweckmäßigerweise jeweils die Gestalt einer Lochscheibe. Der ringförmige Bodenabschnitt 27 hat zweckmäßigerweise eine hülsenförmige Struktur.

Das bereits angesprochene ringförmige Dichtelement 17 ist koaxial zu dem Dichtungsgehäuse 25 in dem Aufnahmeraum 32 angeordnet. Es besteht zweckmäßigerweise aus einem Material mit gummielastischen Eigenschaften und dabei insbesondere aus einem Elastomermaterial. Insofern ist es elastisch reversibel verformbar.

Der radial innen liegende ringförmige Abschnitt des Dichtelementes 17 bildet den schon erwähnten dynamischen Dichtabschnitt 18. Er weist eine nach radial innen orientierte Dichtfläche auf, die als dynamische Dichtfläche 34 bezeichnet sei und die in der Umfangsrichtung der Längsachse 12 ringsum mit Dichtkontakt an der Außenumfangsfläche 14 des momentan vom Dichtungsring 7 umschlossenen Steuerabschnittes 13 des Ventilschiebers 8 anliegt. Wenn der Ventilschieber 8 eine Umschaltbewegung 16 ausführt, gleitet die Außenumfangsfläche 14 an der dynamischen Dichtfläche 34 entlang bis letztlich ein Stegabschnitt 15 in den Bereich innerhalb des Dichtungsringes 7 gelangt und dadurch jeglicher Dichtkontakt zwischen dem dynamischen Dichtabschnitt 18 und dem Ventilschieber 8 aufgehoben ist.

Das ringförmige Dichtelement 17 hat einen weiteren Dichtabschnitt, der als statischer Dichtabschnitt 35 bezeichnet sei, da er innerhalb des Aufnahmeraumes 32 eine statische Abdichtung bezüglich des Dichtungsgehäuses 25 bewirkt. Im Rahmen dieser statischen Abdichtung liegt er dichtend an der den Aufnahmeraum 32 umgrenzenden Innenfläche 36 des Dichtungsgehäuses 25 an.

Wenn der Dichtungsring 7 von einem Steuerabschnitt 13 durchsetzt ist, liegt ein Absperrzustand vor, bei dem die auf einander entgegengesetzten Seiten des Dichtungsringes 7 liegenden Bereiche der Ausnehmung 3 fluiddicht voneinander abgetrennt sind. Dies resultiert aus dem Dichtkontakt zwischen dem dynamischen Dichtabschnitt 18 und dem Ventilschieber 8 und ferner aus dem gleichzeitigen Dichtkontakt zwischen dem statischen Dichtabschnitt 35 und dem Dichtungsgehäuse 25. Das ringförmige Dichtelement 17 selbst ist insgesamt fluidundurchlässig ausgebildet. Hinzukommt, dass das Dichtungsgehäuse 25 an dem Ventilgehäuse 2 auch unter Abdichtung fixiert ist, so dass zwischen dem Dichtungsgehäuse 25 und dem Ventilgehäuse 2 kein Fluiddurchtritt möglich ist. Diese abgedichtete Fixierung ergibt sich vorzugsweise dadurch, dass das Dichtungsgehäuse 25 in die Ausnehmung 3 eingepresst ist, so dass es von radial außen her durch die Innenumfangsfläche 37 der Ausnehmung 3 beaufschlagt und kraftschlüssig festgehalten wird. Die Pressung ist so stark, dass sich ein statischer Dichtkontakt ergibt, der einen Fluiddurchtritt verhindert.

Es versteht sich, dass zur Abdichtung zwischen dem Dichtungsgehäuse 25 und dem Ventilgehäuse 2 bei Bedarf auch noch zusätzliche Dichtmittel vorgesehen sein können oder insgesamt ein anderes Abdichtprinzip verwirklicht sein kann.

Ein zuverlässiger, zugleich abdichtender Presssitz ergibt sich vor allem dann, wenn der ringförmige Bodenabschnitt 27 über eine zylindrische Außenumfangsfläche 38 verfügt, die vor dem Einsetzen in die Ausnehmung 3 bezüglich des Querschnittes der Ausnehmung 3 ein geringes Übermaß aufweist, so dass sich beim Einpressen in die Ausnehmung 3 ein fester Presssitz ergibt und der Dichtungsring 7 ohne zusätzliche Haltemittel allein durch den Presssitz an der gewünschten Position festgehalten wird.

Einer der beiden für sich allein gesehen jeweils ringförmig ausgebildeten Gehäuseschenkel 28 ist als Führungselement konzipiert, das eine Querabstützung des von ihm umschlossenen Ventilschiebers 8 in dessen radialer Richtung bewirkt, so dass der Ventilschieber 8 zur Ausführung der Umschaltbewegungen 16 in der Achsrichtung seiner Längsachse 12 linear verschiebbar geführt ist. Aufgrund dieser Führungseigenschaften sei der betreffende Gehäuseschenkel 28 als Führungsschenkel 28a bezeichnet. Die Querabstützung ergibt sich immer dann, wenn der Ventilschieber 8 mit der Außenumfangsfläche 14 eines Steuerabschnittes 13 den Führungsschenkel 28a durchsetzt.

Zweckmäßigerweise sind alle Dichtungsringe 7 des Ventils 1 untereinander identisch ausgebildet, so dass jeder Dichtungsring 7 zur Querabstützung und Linearführung des Ventilschiebers 8 bezüglich des Ventilgehäuses 2 beiträgt. Allerdings ist es möglich, nur einige der mehreren Dichtungsringe 7 mit einem Führungsschenkel 28a auszustatten. Die Anordnung sollte so getroffen sein, dass der Ventilschieber 8 in jeder Axialposition mit seiner Außenumfangsfläche 14 von den Führungsschenkeln 28a wenigstens zweier Dichtungsringe 7 umgriffen wird. Dadurch ist eine exakte Ausrichtung des Ventilschiebers 8 bezüglich des Ventilgehäuses 2 gewährleistet.

Die Funktionalität als Führungsschenkel 28a resultiert daraus, dass der betreffende Gehäuseschenkel 28, 28a über mindestens eine und bevorzugte genau eine nach radial innen weisende Führungsfläche 42 verfügt, die sich rings um die Längsachse 24 des Dichtungsringes 7 erstreckt und folglich auch in der Umfangsrichtung rings um den Ventilschieber 8 herum. Diese Führungsfläche 42 ist so ausgebildet, dass sie durch unmittelbaren Kontakt mit der Außenumfangsfläche 14 des Ventilschiebers 8 und insbesondere unabhängig vom zugeordneten Dichtelement 17 die erwähnte Querabstützung des Ventilschiebers 8 hervorrufen kann.

Zweckmäßigerweise ist der Ventilschieber 8 bezüglich des Ventilgehäuses 2 ausschließlich durch die vorhandenen Führungsschenkel 28a der Dichtungsringe 7 verschiebbar geführt. Weitere Führungsmittel erübrigen sich und sind daher vorzugsweise nicht vorhanden.

Die Führungsfläche 42 kann eine sich kontinuierlich rings um den Ventilschieber 8 herum erstreckende Ringfläche sein. Als vorteilhafter wird jedoch die beim Ausführungsbeispiel realisierte Ausführungsform gesehen, bei der sich die Führungsfläche 42 aus mehreren mit Abstand zueinander rings um den Ventilschieber 8 herum verteilt angeordneten individuellen Führungsflächenabschnitten 42a zusammensetzt. Jeder dieser dem Ventilschieber 8 radial zugewandten Führungsflächenabschnitte 42a ist vorzugsweise kreisbogenförmig gekrümmt, wobei ihr Krümmungsradius bevorzugt geringfügig größer ist als derjenige der Außenumfangsfläche 14 des Ventilschiebers 8. Ein eventueller Kontakt zwischen den Führungsflächenabschnitten 42a und dem Ventilschieber 8 äußert sich insbesondere in einem Linienkontakt.

Zweckmäßigerweise sind die Führungsflächenabschnitte 42a von nach radial innen zur Längsachse 14 des Dichtungsringes 7 weisenden Randflächen radial nach innen vorstehender Führungsvorsprünge 43 gebildet, die ein einstückiger Bestandteil des Führungsschenkels 28a sind und die zweckmäßigerweise laschenförmig ausgebildet sind. In der Umfangsrichtung des Führungsschenkels 28a, bei der es sich um die Richtung rings um die Längsachse 24 handelt, befindet sich zwischen aufeinanderfolgenden Führungsvorsprüngen 43 jeweils ein radial nach außen zurückversetzter Bereich des Führungsschenkels 28a, der zu keiner Zeit mit dem Ventilschieber 8 in Kontakt treten kann.

Die Führungsflächenabschnitte 42a sind zweckmäßigerweise gleichmäßig rings um den Ventilschieber 8 herum verteilt. Ihre Umfangserstreckung in der Umfangsrichtung des Führungsschenkels 28a ist zweckmäßigerweise geringer als die zwischen ihnen befindlichen, radial nach außen zurückversetzten Bereiche.

Die Führungsfläche 42 bzw. die Gesamtheit der Führungsflächenabschnitte 42a umrahmt einen von dem Ventilschieber 8 durchsetzten Querschnitt, der so auf den Querschnitt der Außenumfangsfläche 14 des Ventilschiebers 8 abgestimmt ist, dass selbiger einerseits leichtgängig durch den Führungsschenkel 28a hindurch gleiten kann, andererseits aber zur Querstabilisierung seiner Lage radial abgestützt wird. Zweckmäßigerweise erreicht man dies dadurch, dass die erwähnte Querschnitte nach Art einer Spielpassung aufeinander abgestimmt sind, so dass bei ideal konzentrischer Ausrichtung zwischen dem Ventilschieber 8 und der Führungsfläche 42 ein minimaler, bevorzugt maximal im Zehntels-Millimeter-Bereich liegender Laufspalt vorliegt. Auf diese Weise kann ein Verklemmen des Ventilschiebers 8 im Führungsschenkel 28a zuverlässig verhindert werden.

Zweckmäßigerweise ist nur einer der beiden Gehäuseschenkel 28 als Führungsschenkel 28a ausgebildet, während der andere Gehäuseschenkel 28 einen Querschnitt umrahmt, der größer ist als der von der Führungsfläche 42 umrahmte Führungsquerschnitt, so dass dieser andere Gehäuseschenkel 28 zu keiner Zeit in direkten Kontakt mit dem Ventilschieber 8 gelangt. Auf diese Weise kann eine statische Überbestimmung vermieden werden, die ansonsten eventuell auftreten könnte, weil die beiden Gehäuseschenkel 28 axial sehr nahe beieinander liegen. Es ist gleichwohl bei entsprechender Fertigungsgenauigkeit durchaus möglich, beide Gehäuseschenkel 28 als Führungsschenkel 28a in dem geschilderten Sinne auszubilden.

Insbesondere in Verbindung mit der geschilderten Führungsfunktion mindestens eines Gehäuseschenkels 28 ist es von Vorteil, wenn das ringförmige Dichtelement 17 relativ zum zugeordneten Dichtungsgehäuse 25 in einer zur Längsachse 24 des Dichtungsringes 7 rechtwinkeligen Radialebene 26a schwimmend beweglich in dem Aufnahmeraum 32 angeordnet ist. Diese radial schwimmende Beweglichkeit, die in der Zeichnung bei 44 durch einen Doppelpfeil illustriert ist, gilt vorzugsweise für das gesamte Dichtelement 17, zumindest jedoch für den im Betrieb des Ventils 1 in unmittelbaren Kontakt mit der Außenumfangsfläche 14 des Ventilschiebers 8 gelangenden dynamischen Dichtabschnitt 18.

Mit dieser schwimmenden, d.h. radial beweglichen Lagerung des Dichtelementes 17 wird unter anderem erreicht, dass die Flächenpressung zwischen der dynamischen Dichtfläche 34 und dem Ventilschieber 8 nicht erhöht wird, wenn der Ventilschieber seine Radiallage bezüglich des Dichtungsgehäuses 25 aufgrund des eventuell vorhanden minimalen Laufspiels zwischen der Außenumfangsfläche 14 und der Führungsfläche 42 verändern sollte. Auf diese Weise wird die Leichtgängigkeit des Ventilschiebers 8 von toleranzbedingt in der Radialebene 26a eventuell auftretenden minimalen Lageveränderungen nicht beeinträchtigt.

Dieser Effekt kann auch ohne eine schwimmende Lagerung des Dichtelementes 17 gewährleistet werden, wenn letzteres so strukturiert ist, dass es ein ausreichend starkes internes elastisches Verformungsvermögen besitzt, das eventuelle Querbewegungen des Ventilschiebers 8 kompensieren kann, ohne die Anpresskraft gegen die Außenumfangsfläche 14 relevant zu erhöhen.

Zweckmäßigerweise sind das Dichtungsgehäuse 25 und das ringförmige Dichtelement 17 in ihren radialen Abmessungen derart aufeinander abgestimmt, dass zwischen der radial nach außen weisenden Außenumfangsfläche 45 des Dichtelementes 17 und der radial nach innen weisenden Innenumfangsfläche 46 des Dichtungsgehäuses 25 innerhalb des Aufnahmeraumes 32 ein freier Ringspalt 47, also ein Luftspalt ausgebildet ist. Dieser freie Ringspalt 47 erstreckt sich konzentrisch radial zwischen dem Dichtelement 17 und dem Dichtungsgehäuse 25. Bei der erwähnten Innenumfangsfläche 46 handelt es sich zweckmäßigerweise um einen radial innen an dem Bodenabschnitt 27 ausgebildeten Flächenabschnitt der Innenfläche 36. Bei der erwähnten Außenumfangsfläche 45 handelt es sich zweckmäßigerweise um die Außenumfangsfläche des Dichtelementes 17 des radial außen liegenden statischen Dichtabschnittes 35.

Die radial bezüglich der Längsachse 24 gemessene Spalthöhe des freien Ringspaltes 47 ist insbesondere so gemessen, dass die erwähnte radial schwimmende Lagerung des Dichtelementes 17 gewährleistet ist.

Die radial bezüglich der Längsachse 14 gemessenen Abmessungen des Dichtelementes 17 sind zweckmäßigerweise kleiner als die radial gemessene Tiefe des Aufnahmeraumes 32 gemessen von der Innenumfangsfläche 46 bishin zu der Führungsfläche 42.

Vorzugsweise verfügt das Dichtelement 17 an seinen beiden einander axial entgegengesetzten Seitenflächen 48a, 48b jeweils über einen axial abstehenden Sicherungsvorsprung 49a, 49b. Jeder dieser Sicherungsvorsprünge 49a, 49b ist zweckmäßigerweise ringförmig und koaxial zu der Längsachse 24 angeordnet.

Weiterhin verfügt das Dichtungsgehäuse 25 im Innern des Aufnahmeraumes 32 an den beiden einander axial zugewandten seitlichen Innenflächenabschnitten 52a, 52b der Innenfläche 36 jeweils über eine dem auf der gleichen Seite liegenden Sicherungsvorsprung 49a, 49b zugeordnete axiale Sicherungsaussparung 53a, 53b. Auch jede der beiden axialen Sicherungsausnehmungen 53a, 53b ist ringförmig und koaxial zu der Längsachse 24 angeordnet.

Auf diese Weise sind sich die Sicherungsvorsprünge 49a, 49b und Sicherungsaussparungen 53a, 53b paarweise zugeordnet, wobei jeweils ein Sicherungsvorsprung 49a, 49b in die ihm zugeordnete axiale Sicherungsaussparung 53a, 53b axial eintaucht.

Auf diese Weise hintergreift jeder Sicherungsvorsprung 49a, 49b in axialer Richtung eine radial nach außen weisende Sicherungsfläche 54, die von einer Flanke der zugeordneten axialen Sicherungsaussparung 53a, 53b gebildet ist.

Bei einem nicht gezeigten Ausführungsbeispiel sind nur auf einer Axialseite des Dichtelementes 17 ein Sicherungsvorsprung und eine zugeordnete Sicherungsaussparung angeordnet. Es ist außerdem ein Ausführungsform möglich, bei der sich die ineinander eingreifenden Sicherungsvorsprünge und Sicherungsaussparungen jeweils nur ein Stück weit rings um die Längsachse 24 herum erstrecken.

Die miteinander kooperierenden Sicherungsvorsprünge 49a, 49b und Sicherungsaussparungen 53a, 53b definieren eine Sicherungseinrichtung, die ein unerwünschtes radiales Herausziehen des Dichtelementes 17 aus dem Aufnahmeraum 32 verhindert. Ein solches Herausziehen könnte andernfalls eventuell durch eine Sogwirkung hervorgerufen werden, die beim Öffnungs- oder Schließvorgang an dem dynamischen Dichtabschnitt 18 erzeugt wird.

Durch die Sicherungsmaßnahme wird quasi eine formschlüssige Fixierung des Dichtelementes 17 im Dichtungsgehäuse 25 bewirkt. Allerdings sind die radialen Abmessungen der ineinander eingreifenden Sicherungskomponenten, also des Sicherungsvorsprunges 49a, 49b und der Sicherungsaussparung 53a, 53b, so aufeinander abgestimmt, dass radiales Bewegungsspiel vorliegt, das die schwimmende Beweglichkeit gemäß Pfeil 44 nicht beeinträchtigt.

Die Sicherungsvorsprünge 49a, 49b können in unterschiedlichen Bereichen an dem Dichtelement 17 angeordnet sein. Das Ausführungsbeispiel der Figur 2 zeigt eine Variante, bei der die Sicherungsvorsprünge 49a, 49b mit radialem Abstand zu dem statischen Dichtabschnitt 35 diesbezüglich näher bei der Längsachse 24 angeordnet sind. Sie befinden sich hier insbesondere in einem den statischen Dichtabschnitt 35 mit dem dynamischen Dichtabschnitt 18 einstückig verbindenden Übergangsabschnitt 55 des Dichtelementes 17.

Bei einer alternativen Ausführungsform, die beispielhaft in der Figur 3 illustriert ist, sind die Sicherungsvorsprünge 49a, 49b unmittelbar von dem statischen Dichtabschnitt 35 gebildet bzw. sind ein Bestandteil dieses statischen Dichtabschnittes 35. Hier befinden sich die axialen Sicherungsvorsprünge 49a, 49b zweckmäßigerweise derart radial außen an dem Dichtelement 17, dass sie zur Bildung der Außenumfangsfläche 45 beitragen.

Die Realisierung des mindestens einen Sicherungsvorsprunges 49a, 49b als Bestandteil des statischen Dichtabschnittes 35 hat den Vorteil einer besonders einfachen Herstellung des Dichtelementes 17.

Das Dichtungsgehäuse 25 hat bevorzugt einen das Einsetzen des Dichtelementes 17 vereinfachenden mehrteiligen Aufbau. Dabei sind zweckmäßigerweise beide Gehäuseschenkel 28 als bezüglich des Bodenabschnittes 27 separate Körper bzw. Bauteile ausgebildet, die jeweils in geeigneter Weise an dem Bodenabschnitt 27 fixiert sind. Das Dichtungsgehäuse 25 enthält bevorzugt drei aneinander befestigte separate Körper in Gestalt der beiden Gehäuseschenkel 28 und des ringförmigen Bodenabschnittes 27.

Jeder Gehäuseschenkel 28 ist zweckmäßigerweise unabhängig vom jeweils anderen Gehäuseschenkel 28 in einem eigenen Fügebereich 56 an dem Bodenabschnitt 27 befestigt. Auf diese Weise ergibt sich das starre Dichtungsgehäuse 25 mit U-förmiger Querschnittskontur.

Sowohl die beiden Gehäuseschenkel 28 als auch der Bodenabschnitt 27 tragen zweckmäßigerweise zur Bildung der Innenfläche 36 des Aufnahmeraumes 32 bei.

Bevorzugt ist der ringförmige Bodenabschnitt 27 an seinen beiden axialen Außenflächen 57 mit jeweils einer konzentrisch angeordneten ringförmigen Fügenut 58 versehen, in die der zugeordnete, axial angesetzte ringförmige Gehäuseschenkel 28 mit seinem radial außen liegenden äußeren Randbereich 62 eingreift und mittels dieses äußeren Randbereichs 62 fixiert ist. Konkret erfolgt die Fixierung der Gehäuseschenkel 28 vorzugsweise durch lokale plastische Verformung des die Fügenut 58 begrenzenden Bereiches des Bodenabschnittes 27, so dass sich nach radial nach innen ragende plastisch verformte Halteabschnitte 63 ergeben, die den zugeordneten Gehäuseschenkel 28 axial außen radial übergreifen und in axialer Richtung mit dem Bodenabschnitt 27 verspannen. Dies ist eine effektive und leicht durchführbare Befestigungsmaßnahme.

Andere Arten zur Befestigung der Gehäusedeckel 28 an dem Bodenabschnitt 27 sind ebenfalls möglich. Beispielsweise könnte jeder Gehäusedeckel 28 in eine Fügenut 58 eingeschnappt oder eingerastet sein. Auch wäre beispielsweise eine Schweißverbindung oder Klebeverbindung möglich. Diese Aufzählung ist als nicht abschließend zu verstehen.

Der statische Dichtabschnitt 35 kann zweckmäßigerweise derart mit der Innenfläche 36 des Dichtungsgehäuses 25 dichtend zusammenwirken, dass in dem oben erwähnten Absperrzustand während des Betriebs des Ventils 1 auch dann kein Fluidübertritt zwischen den beiden Axialseiten des Dichtungselementes 17 möglich ist, wenn der eine und/oder andere Fügebereich 56 fluiddurchlässig ist. Dies hat den Vorteil, dass bei der Befestigung der Gehäuseschenkel 28 am Bodenabschnitt 27 kein besonderes Augenmerk auf eine fluiddichte Verbindung gerichtet werden muss, was die Herstellungskosten reduziert. Bei den Ausführungsbeispielen ist der Fügebereich in der Tat nicht fluiddicht verschlossen.

Bevorzugt resultiert die besondere statische Abdichtfunktion aus einer als Ringnut mit nach radial innen weisender Nutöffnung gestalteten Abdichtungsnut 64, die im Innern des Aufnahmeraumes 32 in der radial nach innen orientierten Innenumfangsfläche 46 des ringförmigen Bodenabschnittes 27 ausgebildet ist und in die das Dichtelement 17 mit seinem radial außen angeordneten statischen Dichtabschnitt 35 eintaucht. Dabei ist der statische Dichtabschnitt 35 so ausgebildet, dass er an den beiden einander zugewandten und sich mit axialem Abstand gegenüberliegenden Nutflanken 65 der Abdichtungsnut 64 jeweils unter Abdichtung anliegen kann. Da jeder zwischen dem Bodenabschnitt 27 und einem Gehäusedeckel 28 vorhandene Fügebereich 56 außerhalb der Abdichtungsnut 64 liegt, bildet der statische Dichtkontakt zwischen dem statischen Dichtabschnitt 35 und wenigstens einer Nutflanke 65 eine wirksame fluiddichte Sperre, die einen Fluidübertritt zwischen den beiden Axialseiten des Dichtungselementes 17 verhindert.

Der ringförmige Bodenabschnitt 27 ist zweckmäßigerweise zumindest in dem die Abdichtungsnut 64 definierenden Bereich und vorzugsweise in seiner Gesamtheit einstückig ausgebildet.

Die Abdichtungsnut 64 definiert den radial außen liegenden Randbereich des Aufnahmeraumes 32.

Die geschilderte statische Abdichtfunktion ist auch dann vorteilhaft, wenn nur einer der Gehäuseschenkel 28 ein bezüglich des ringförmigen Bodenabschnittes 27 separater Körper ist und der andere Gehäuseschenkel 28 einstückig mit dem ringförmigen Bodenabschnitt 27 ausgebildet ist. Selbst bei einer komplett einstückigen Bauform des Dichtungsgehäuses 25 verhindert die erwähnte statische Abdichtung in vorteilhafter Weise ein Umströmen des Dichtelementes 17 im Innern des Aufnahmeraumes 32.

Eine optimale statische Abdichtung aufgrund besonders ausgeprägter Flächenpressung lässt sich erzielen, wenn an den einander axial entgegengesetzten Seitenflächen des statischen Dichtabschnittes 35 jeweils mindestens ein erhabener Dichtbereich 66 ausgebildet ist, der an die zugeordnete Nutflanke 65 andrückbar ist. Dieser erhabene Dichtbereich 66 erstreckt sich ununterbrochen konzentrisch rings um die Längsachse des Dichtelementes 17.

Der erhabene Dichtbereich 66 kann beispielsweise, entsprechend des in Figur 2 illustrierten Ausführungsbeispiels, wulstförmig gestaltet sein und einen Dichtwulst ausbilden, der bezüglich radial benachbarten Flächenabschnitten des statischen Dichtabschnittes 35 axial vorsteht. Ein solcher Dichtwulst ist zweckmäßigerweise abgerundet konturiert.

Eine andere bevorzugte Realisierungsform des erhabenen Dichtbereiches 66 illustriert die Figur 3. Hier hat der erhabene Dichtbereich 66 die Form einer Dichtkante, die im Übergangsbereich zwischen der radialen Außenumfangsfläche 45 und jeder axialen Seitenfläche des statischen Dichtabschnittes 35 ausgebildet ist, insbesondere dadurch, dass die axialen Seitenflächen des statischen Dichtabschnittes 35 bezüglich der Radialebene 26a geneigt sind und nach radial außen divergieren.

Der statische Dichtabschnitt 35 kann so ausgebildet sein, dass er stets gleichzeitig unter Abdichtung an beiden Nutflanken 65 der Abdichtungsnut 64 anliegt. Als besonders vorteilhaft wird jedoch eine Ausführungsform angesehen, bei der der statische Dichtabschnitt 35 eine geringere Breite hat als die Abdichtungsnut 64 und wobei das ringförmige Dichtelement 17 insgesamt mit axialem Spiel und folglich axial beweglich in dem Dichtungsgehäuse 25 aufgenommen ist, so dass sich der statische Dichtabschnitt 35 alternativ an entweder die eine oder die andere der beiden Nutflanken 65 der Abdichtungsnut 64 dichtend anlegen kann.

An welche der beiden Nutflanken 65 der statische Dichtabschnitt 35 angedrückt wird, hängt von den das Dichtelement 17 axial beaufschlagenden Fluiddruckverhältnissen ab. In Abhängigkeit von der auf das Dichtelement 17 axial einwirkenden Druckdifferenz wird das Dichtelement 17 entweder in die eine oder in die andere axiale Richtung innerhalb des Aufnahmeraums 32 verschoben und an die zugeordnete Nutflanke 65 angedrückt, wobei es von der anderen Nutflanke 65 abgehoben ist.

In den Figuren 2 und 3 ist in umrahmten Ausschnitten des Dichtringes 7 ein Betriebszustand illustriert, bei dem aufgrund einer nach rechts wirkenden Druckdifferenz das Dichtelement 17 gemäß Pfeil 67 relativ zum Dichtungsgehäuse 25 verschoben wurde und an die der Verschieberichtung entgegengesetzt orientierte Nutflanke 65 unter statischer Abdichtung angedrückt wird.

Das Dichtungselement 17 ist durch die geschilderte Ausgestaltung zweckmäßigerweise axial schwimmend bzw. begrenzt beweglich innerhalb des Aufnahmeraumes 32 angeordnet, was es ihm ermöglicht, sich zu Beginn einer Umschaltbewegung 16 gemeinsam mit dem Ventilschieber 8 zu bewegen und auf die in der Bewegungsrichtung vorgelagerte Nutflanke 65 erst aufzutreffen und gestoppt zu werden, wenn der Ventilschieber 8 schon eine gewisse Bewegungsenergie aufweist, so dass das Lösen des leicht anhaftenden Kontaktes zwischen der dynamischen Dichtfläche 34 und der Außenumfangsfläche 14 des Ventilschiebers 8 unterstützt wird.

Wenn der Dichtungsring 7 mit mindestens einer der oben erwähnten axialen Sicherungsausnehmungen 53a, 53b ausgestattet ist, ist es von Vorteil, wenn der statische Dichtabschnitt 35 so geformt ist, dass er gleichzeitig jeden Sicherungsvorsprung 49a, 49b bildet. Dies trifft auf das Ausführungsbeispiel der Figur 3 zu. Hierbei ist dann zweckmäßigerweise zumindest ein Abschnitt der jeweiligen Sicherungsaussparung von der Abdichtungsnut 64 gebildet.

Gemäß Figur 3 setzen sich die beiden axialen Sicherungsaussparungen 53a, 53b aus jeweils zwei Abschnitten zusammen, von denen der eine im Bodenabschnitt 27 und der andere im zugeordneten Gehäuseschenkel 28 ausgebildet ist. Der im Bodenabschnitt 27 ausgebildete Abschnitt der Sicherungsaussparung 53a, 53b ist zugleich ein Abschnitt der Abdichtungsnut 64. Jede radiale Sicherungsfläche 64 ist hier an einem der Gehäuseschenkel 28 ausgebildet.

Die radiale Tiefe der Abdichtungsnut 64 ist insbesondere so gewählt, dass der statische Dichtabschnitt 35 unabhängig von der bezüglich des Dichtungsgehäuses 25 momentan eingenommenen Radialposition des Dichtelementes 17 mit Dichtkontakt an den Nutflanken 65 anliegen kann. Aufgrund der bevorzugten radial schwimmenden Lagerung des Dichtelementes ist der statische Dichtabschnitt 35 sogar in der Lage, an derjenigen Nutflanke 65, an der er momentan anliegt, unter Beibehaltung des Dichtkontaktes radial entlangzugleiten, falls sich die koaxiale Ausrichtung zwischen dem Dichtelement 17 und dem Dichtungsgehäuse 25 bei einer Umschaltbewegung 16 des Ventilschiebers 8 minimal ändern sollte.

## Patentansprüche

1. Ventil, mit einem Ventilgehäuse (2) und einem kolbenartigen Ventilschieber (8), der in einer eine mittige Längsachse (12) aufweisenden Ausnehmung (3) des Ventilgehäuses (2) unter Ausführung linearer Umschaltbewegungen (16) zwischen verschiedenen Arbeitspositionen axial verschiebbar angeordnet ist, und ferner mit mindestens einem den Ventilschieber (8) in der Ausnehmung (3) koaxial umschließenden Dichtungsring (7), der über ein ortsfest bezüglich des Ventilgehäuses (2) fixiertes mehrteiliges ringförmiges Dichtungsgehäuse (25) mit U-förmigem Querschnitt und zwei sich gegenüberliegenden, durch einen radial außen liegenden ringförmigen Bodenabschnitt (27) miteinander verbundenen Gehäuseschenkeln (28) verfügt, wobei mindestens einer der beiden Gehäuseschenkel (28) als bezüglich des Bodenabschnittes (27) separater, in einem Fügebereich (56) an dem Bodenabschnitt (27) befestigter Körper ausgebildet ist, wobei das Dichtungsgehäuse (25) einen Aufnahmeraum (32) umgrenzt, der radial innen eine seitlich von den beiden Gehäuseschenkeln (28) flankierte schlitzartige Gehäuseöffnung (33) aufweist und in dem koaxial ein ringförmiges Dichtelement (17) angeordnet ist, das einerseits zum statisch abdichtenden Zusammenwirken mit der Innenfläche (36) des Dichtungsgehäuses (25) und andererseits zum dynamisch abdichtenden Zusammenwirken mit der Außenumfangsfläche (14) des Ventilschiebers (8) ausgebildet ist, wobei das Dichtelement (17) für die dynamische Abdichtung einen im Bereich der schlitzartigen Gehäuseöffnung (33) angeordneten dynamischen Dichtabschnitt (18) aufweist, der den Ventilschieber (8) in mindestens einer seiner Arbeitspositionen mit Dichtkontakt koaxial umschließt, **dadurch gekennzeichnet, dass** im Innern des Aufnahmeraumes (32) des Dichtungsgehäuses (25) in der radial nach innen weisenden Innenumfangsfläche (46) des Bodenabschnittes (27) eine nach radial innen hin offene, als Ringnut gestaltete Abdichtungsnut (64) ausgebildet ist, in die das Dichtelement (17) mit einem radial außen angeordneten statischen Dichtabschnitt (35) eintaucht, der zum statisch abdichtenden axialen Zusammenwirken mit den beiden sich in dem Bodenabschnitt (27) gegenüberliegenden Nutflanken (65) der Abdichtungsnut (64) ausgebildet ist.

2. Ventil nach Anspruch 1, **dadurch gekennzeichnet, dass** jeder Gehäuseschenkel (28) als bezüglich des Bodenabschnittes (27) separater, in einem eigenen Fügebereich (56) an dem Bodenabschnitt (27) befestigter Körper ausgebildet ist, wobei die Abdichtungsnut (64) zwischen den beiden Fügebereichen (56) liegt.

3. Ventil nach Anspruch 1 oder 2, **dadurch gekennzeichnet, dass** der Dichtungsring (7) an den einander axial entgegengesetzten Seitenflächen seines statischen Dichtabschnittes (35) jeweils mindestens einen als Dichtkante oder Dichtwulst gestalteten erhabenen Dichtbereich (66) aufweist, der an der benachbarten Nutflanke (65) der Abdichtungsnut statisch dichtend anliegen kann.

4. Ventil nach einem der Ansprüche 1 bis 3, **dadurch gekennzeichnet, dass** der Fügebereich (56) fluiddurchlässig ist.

5. Ventil nach einem der Ansprüche 1 bis 4, **dadurch gekennzeichnet, dass** der als separater Körper ausgebildete ringförmige Gehäuseschenkel (28) in eine an der axialen Außenfläche (57) des ringförmigen Bodenabschnittes (27) ausgebildete ringförmige Fügenut (58) eingesetzt ist und darin zweckmäßigerweise durch plastisch verformte Halteabschnitte (63) des Bodenabschnittes (27) fixiert ist.

6. Ventil nach einem der Ansprüche 1 bis 5, **dadurch gekennzeichnet, dass** der statische Dichtabschnitt (35) eine geringere Breite hat als die Abdichtungsnut (64), wobei das ringförmige Dichtelement (17) axial beweglich im Dichtungsgehäuse (25) angeordnet ist, so dass es durch den es im Betrieb axial beaufschlagenden Fluiddruck an jeweils eine der Nutflanken (65) der Abdichtungsnut (64) abdichtend axial andrückbar ist.

7. Ventil nach einem der Ansprüche 1 bis 6, **dadurch gekennzeichnet, dass** das Dichtelement (17) mindestens einen axial abstehenden Sicherungsvorsprung (49a, 49b) aufweist, der in eine seitlich an der Innenfläche (36) des Dichtungsgehäuses (25) ausgebildete axiale Sicherungsaussparung (53a, 53b) eingreift, so dass das Dichtelement (17) gegen ein radiales Herausziehen aus dem Aufnahmeraum (32) des Dichtungsgehäuses (25) gesichert ist.

8. Ventil nach Anspruch 7, **dadurch gekennzeichnet, dass** das Dichtelement (17) an seinen einander axial entgegengesetzten Seitenflächen (48a, 48b) jeweils einen Sicherungsvorsprung (49a, 49b) aufweist, der in eine von zwei sich gegenüberliegenden axialen Sicherungsaussparungen (53a, 53b) der Innenfläche (36) des Dichtungsgehäuses (25) eingreift.

9. Ventil nach Anspruch 7 oder 8, **dadurch gekennzeichnet, dass** der mindestens eine Sicherungsvorsprung (49a, 49b) und die mindestens eine Sicherungsaussparung (53a, 53b) ringförmig ausgebildet ist.

10. Ventil nach einem der Ansprüche 7 bis 9, **dadurch gekennzeichnet, dass** der mindestens eine Sicherungsvorsprung (49a, 49b) von dem statischen Dichtabschnitt (35) gebildet ist, wobei zumindest ein Abschnitt der mindestens einen Sicherungsaussparung (53a, 53b) von der Abdichtungsnut (64) gebildet ist.

11. Ventil nach einem der Ansprüche 7 bis 10, **dadurch gekennzeichnet, dass** der mindestens eine Sicherungsvorsprung (53a, 53b) mit radialem Abstand zu dem statischen Dichtabschnitt (35) angeordnet und diesbezüglich näher bei der schlitzartigen Gehäuseöffnung (33) des Dichtungsgehäuses (25) angeordnet ist.

12. Ventil nach einem der Ansprüche 1 bis 11, **dadurch gekennzeichnet, dass** in der Ausnehmung (3) des Ventilgehäuses (2) mehrere den Ventilschieber (8) umschließende Dichtungsringe (7) mit axialem Abstand zueinander angeordnet sind.

13. Ventil nach einem der Ansprüche 1 bis 12, **dadurch gekennzeichnet, dass** zumindest der dynamische Dichtabschnitt (18) des Dichtelementes (17) in einer zur Längsachse (24) des Dichtungsringes (7) rechtwinkeligen Radialebene (26a) relativ zum Dichtungsgehäuse (25) schwimmend beweglich ausgebildet ist, wobei zweckmäßigerweise das gesamte Dichtelement (17) in einer zur Längsachse (24) des Dichtungsringes (7) rechtwinkeligen Radialebene (26a) relativ zum Dichtungsgehäuse (25) schwimmend beweglich ausgebildet ist.

14. Ventil nach einem der Ansprüche 1 bis 13, **dadurch gekennzeichnet, dass** zwischen der radial nach außen weisenden Außenumfangsfläche (45) des Dichtelementes (17) und der radial nach innen weisenden Innenumfangsfläche (46) des Dichtungsgehäuses (25) ein freier Ringspalt (47) ausgebildet ist, der eine radiale Beweglichkeit des Dichtelementes (17) bezüglich des Dichtungsgehäuses (25) ermöglicht.

15. Ventil nach einem der Ansprüche 1 bis 14, **dadurch gekennzeichnet, dass** mindestens einer und zweckmäßigerweise nur einer der beiden Gehäuseschenkel (28) des Dichtungsgehäuses (25) als Führungsschenkel (28a) ausgebildet ist, der über mindestens eine nach radial innen weisende Führungsfläche (42) verfügt, die durch unmittelbaren Kontakt mit der Außenumfangsfläche (14) des Ventilschiebers (8) unabhängig vom zugeordneten Dichtelement (17) eine Querabstützung und lineare Verschiebeführung des Ventilschiebers (8) bewirkt.

## Claims

1. Valve, with a valve casing (2) and a piston-like valve spool (8), which is mounted with axial sliding facility in a recess (3), with a central longitudinal axis (12), of the valve casing (2) in order to execute linear changeover movements (16) between different operating positions, and moreover with at least one seal ring (7) coaxially encompassing the valve spool (8) in the recess (3) and having a multi-part annular seal housing (25) with U-shaped cross-section, fixed immovably relative to the valve casing (2), and two opposing housing legs (28) joined together by an annular base section (27) lying radially outwards, arranged between the two housing legs (28), wherein at least one of the two housing legs (28) is in the form of a body which is separate from the base section (27) and is attached to the base section (27) in a joining area (56), wherein the seal housing (25) bounds a receiving space (32) which has on the radial inside a slot-like housing opening (33) flanked at the side by the two housing legs (28) and in which is mounted coaxially an annular seal element (17), which is designed on the one hand for static sealing interaction with the inner face (36) of the seal housing (25) and on the other hand for dynamic sealing interaction with the outer peripheral face (14) of the valve spool (8), wherein for the dynamic sealing the seal element (17) has in the area of the slot-like housing opening (33) a dynamic sealing section (18) which encompasses the valve spool (8) coaxially in at least one of its operating positions with sealing contact, **characterised in that** there is formed in the interior of the receiving space (32) of the seal housing (25), in the radially inwards facing inner peripheral face (46) of the base section (27), a sealing slot (64) designed as an annular slot and open towards the radial inside, into which the seal element (17) dips with its radially outwards aligned sealing section (35), which is designed for static sealing axial interaction with the two slot sides (65) of the sealing slot (64) lying opposite one another in the base section (27).

2. Valve according to claim 1, **characterised in that** each housing leg (28) is in the form of a body which is separate from the base section (27) and is attached to the base section (27) in a joining area (56), wherein the sealing slot (64) lies between the two joining areas (56).

3. Valve according to claim 1 or 2, **characterised in that** the seal ring (7) has at each of the axially opposite side faces of its static sealing section (35) at least one raised sealing zone (66) in the form of a sealing edge or sealing bead, which is able to make static sealing contact with the adjacent slot side (65) of the sealing slot.

4. Valve according to any of claims 1 to 3, **characterised in that** the joining area (56) is fluid-permeable.

5. Valve according to any of claims 1 to 4, **characterised in that** the annular housing leg (28) in the form of a separate body is inserted in an annular joining slot (58) formed in the axial outer surface (57) of the annular base section (27) and in which it is fixed expediently by plastically deformed holding sections (63) of the base section (27).

6. Valve according to any of claims 1 to 5, **characterised in that** the static sealing section (35) has a smaller width than the sealing slot (64), wherein the annular seal element (17) is axially movable in the seal housing (25), so that it may be pressed by the fluidic pressure being applied axially in operation against in each case one of the slot sides (65) of the sealing slot (64) with axial sealing.

7. Valve according to any of claims 1 to 6, **characterised in that** the seal element (17) has at least one axially protruding locking projection (49a, 49b) which engages in an axial locking recess (53a, 53b) formed on the side of the inner face (36) of the seal housing (25), so that the seal element (17) is secured against radial extraction from the receiving space (32) of the seal housing (25).

8. Valve according to claim 7, **characterised in that** the seal element (17) has on each of its axially opposing side faces (48a, 48b) a locking projection (49a, 49b) which engages in one of two axially opposing locking recesses (53a, 53b) of the inner face (36) of the seal housing (25).

9. Valve according to claim 7 or 8, **characterised in that** the locking projection or projections (49a, 49b) and the locking recess or recesses (53a, 53b) is or are annular in shape.

10. Valve according to any of claims 7 to 9, **characterised in that** the locking projection or projections (49a, 49b) is or are formed by the static sealing section (35), wherein at least one section of the locking recess or recesses (53a, 53b) is formed by the sealing slot (64).

11. Valve according to any of claims 7 to 10, **characterised in that** the locking projection or projections (53a, 53b) is or are arranged with radial clearance from the static sealing section (35) and in this respect is or are located closer to the slot-like housing opening (33) of the seal housing (25).

12. Valve according to any of claims 1 to 11, **characterised in that** several seal rings (7) encompassing the valve spool (8) are arranged with axial clearance from one another in the recess (3) of the valve casing (2).

13. Valve according to any of claims 1 to 12, **characterised in that** at least the dynamic sealing section (18) of the seal element (17) is designed for floating movement relative to the seal housing (25) in a radial plane (26a) at right-angles to the longitudinal axis (24) of the seal ring (7), wherein expediently the whole seal element (17) is designed for floating movement relative to the seal housing (25) in a radial plane (26a) at right-angles to the longitudinal axis (24) of the seal ring (7).

14. Valve according to any of claims 1 to 13, **characterised in that** there is formed between the radially outwards facing outer peripheral face (45) of the seal element (17) and the radially inwards facing inner peripheral face (46) of the seal housing (25) a free annular gap (47) which allows radial movement of the seal element (17) relative to the seal housing (25).

15. Valve according to any of claims 1 to 14, **characterised in that** at least one and expediently only one of the two housing legs (28) of the seal housing (25) is designed as a guide leg (28a), which has at least one radially inwards facing guide surface (42) which, through direct contact with the outer peripheral face (14) of the valve spool (8), effects lateral support and linear sliding guidance of the valve spool (8), independently of the assigned seal element (17).

## Revendications

1. Vanne, comprenant un boîtier de vanne (2) et un coulisseau de vanne (8) de type piston, qui est disposé de manière à pouvoir être déplacé par un coulissement axial entre différentes positions de travail dans un creux (3), présentant un axe longitudinal (12) central, du boîtier de vanne (2) en exécutant des mouvements de commutation (16) linéaires, et comprenant en outre au moins une bague d'étanchéité (7) entourant de manière coaxiale le coulisseau de vanne (8) dans le creux (3), laquelle bague d'étanchéité dispose d'un boîtier d'étanchéité (25) de forme annulaire présentant plusieurs parties, fixé de manière stationnaire par rapport au boîtier de vanne (2), pourvu d'une section transversale présentant une forme de U et de deux branches de boîtier (28) se faisant face, reliées l'une à l'autre par un segment de fond (27) de forme annulaire situé radialement côté extérieur, dans laquelle au moins une des deux branches de boîtier (28) est réalisée sous la forme d'un corps séparé par rapport au segment de fond (27), fixé dans une zone d'assemblage (56) au niveau du segment de fond (27), dans laquelle le boîtier d'étanchéité (25) délimite un espace de réception (32), qui présente radialement côté intérieur une ouverture de boîtier (33) de type entaille flanquée latéralement des deux branches de boîtier (28) et dans lequel un élément étanche (17) de forme annulaire est disposé de manière coaxiale, lequel est réalisé d'une part afin de coopérer tout en assurant l'étanchéité de manière statique avec la face intérieure (36) du boîtier d'étanchéité (25) et d'autre part afin de coopérer tout en assurant l'étanchéité de manière dynamique avec la face périphérique extérieure (14) du coulisseau de vanne (8), dans laquelle l'élément étanche (17) présente, en vue de l'étanchéification dynamique, un segment étanche (18) dynamique disposé dans la zone de l'ouverture de boîtier (33) de type entaille, lequel segment étanche entoure de manière coaxiale le coulisseau de vanne (8) dans au moins une de ses positions de fonctionnement avec un contact étanche, **caractérisée en ce qu'**est réalisée, à l'intérieur de l'espace de réception (32) du boîtier d'étanchéité (25), dans la face périphérique intérieure (46) pointant radialement vers l'intérieur, du segment de fond (27), une rainure d'étanchéification (64) ouverte radialement vers l'intérieur, configurée sous la forme d'une rainure annulaire, dans laquelle l'élément étanche (17) s'enfonce par un segment étanche (35) statique disposé radialement côté extérieur, lequel est réalisé afin de coopérer de manière axiale tout en assurant une étanchéité de manière statique avec les deux flancs de rainure (65), se faisant face dans le segment de fond (27), de la rainure d'étanchéification (64).

2. Vanne selon la revendication 1, **caractérisée en ce que** chaque branche de boîtier (28) est réalisée sous la forme d'un corps séparé par rapport au segment de fond (27), fixé dans une zone d'assemblage (56) propre au niveau du segment de fond (27), dans laquelle la rainure d'étanchéification (64) se trouve entre les deux zones d'assemblage (56).

3. Vanne selon la revendication 1 ou 2, **caractérisée en ce que** la bague d'étanchéité (7) présente, au niveau des faces latérales, opposées axialement les unes aux autres, de son segment étanche (35) statique, respectivement au moins une zone étanche (66) en relief configurée sous la forme d'une arête étanche ou d'un bourrelet étanche, laquelle zone étanche peut reposer de manière à assurer l'étanchéité de manière statique au niveau du flanc de rainure (65) adjacent de la rainure d'étanchéification.

4. Vanne selon l'une quelconque des revendications 1 à 3, **caractérisée en ce que** la zone d'assemblage (56) est perméable aux fluides.

5. Vanne selon l'une quelconque des revendications 1 à 4, **caractérisée en ce que** la branche de boîtier (28) de forme annulaire réalisée sous la forme d'un corps séparé est insérée dans une rainure d'assemblage (58) de forme annulaire réalisée au niveau de la face extérieure (57) axiale du segment de fond (27) de forme annulaire et y est fixée de manière appropriée par des segments de maintien (63), déformés plastiquement, du segment de fond (27).

6. Vanne selon l'une quelconque des revendications 1 à 5, **caractérisée en ce que** le segment étanche (35) statique a une largeur inférieure à celle de la rainure d'étanchéification (64), dans laquelle l'élément étanche (17) de forme annulaire est disposé de manière mobile axialement dans le boîtier d'étanchéité (25) de sorte qu'il peut être pressé de manière axiale en assurant l'étanchéité au niveau respectivement d'un des flancs de rainure (65) de la rainure d'étanchéification (64) par la pression de fluide exerçant une action de contrainte axiale en fonctionnement.

7. Vanne selon l'une quelconque des revendications 1 à 6, **caractérisée en ce que** l'élément étanche (17) présente au moins une partie faisant saillie de blocage (49a, 49b) dépassant de manière axiale, laquelle vient en prise avec un évidement de blocage (53a, 53b) axial réalisé latéralement au niveau de la face intérieure (36) du boîtier d'étanchéité (25) de sorte que l'élément étanche (17) est bloqué de manière à empêcher toute sortie radiale hors de l'espace de réception (32) du boîtier d'étanchéité (25).

8. Vanne selon la revendication 7, **caractérisée en ce que** l'élément étanche (17) présente, au niveau de ses faces latérales (48a, 48b) opposées axialement les unes aux autres, respectivement une partie faisant saillie de blocage (49a, 49b), qui vient en prise avec l'un des deux évidements de blocage (53a, 53b) axiaux, se faisant face l'un à l'autre, de la face intérieure (36) du boîtier d'étanchéité (25).

9. Vanne selon la revendication 7 ou 8, **caractérisée en ce que** l'au moins une partie faisant saillie de blocage (49a, 49b) et l'au moins un évidement de blocage (53a, 53b) sont réalisés de manière à présenter une forme annulaire.

10. Vanne selon l'une quelconque des revendications 7 à 9, **caractérisée en ce que** l'au moins une partie faisant saillie de blocage (49a, 49b) est formée par le segment étanche (35) statique, dans laquelle au moins un segment de l'au moins un évidement de blocage (53a, 53b) est formé par la rainure d'étanchéification (64).

11. Vanne selon l'une quelconque des revendications 7 à 10, **caractérisée en ce que** l'au moins une partie faisant saillie de blocage (53a, 53b) est disposée avec une distance radiale par rapport au segment étanche (35) statique et est disposée, à cet égard, davantage à proximité de l'ouverture de boîtier (33) de type entaille du boîtier d'étanchéité (25).

12. Vanne selon l'une quelconque des revendications 1 à 11, **caractérisée en ce que** plusieurs bagues d'étanchéité (7) entourant le coulisseau de vanne (8) sont disposées à une distance axiale les unes des autres dans le creux (3) du boîtier de vanne (2).

13. Vanne selon l'une quelconque des revendications 1 à 12, **caractérisée en ce qu'**au moins le segment étanche (18) dynamique de l'élément étanche (17) est réalisé de manière mobile et flottante par rapport au boîtier d'étanchéité (25), dans un plan radial (26a) à angles droits par rapport à l'axe longitudinal (24) de la bague d'étanchéité (7), dans laquelle de manière appropriée l'ensemble de l'élément étanche (17) est réalisé de manière mobile et flottante par rapport au boîtier d'étanchéité (25) dans un plan radial (26a) à angles droits par rapport à l'axe longitudinal (24) de la bague d'étanchéité (7).

14. Vanne selon l'une quelconque des revendications 1 à 13, **caractérisée en ce qu'**est réalisée, entre la face périphérique extérieure (45), pointant radialement vers l'extérieur, de l'élément étanche (17) et la face périphérique intérieure (46) pointant radialement vers l'intérieur du boîtier d'étanchéité (25), une fente annulaire (47) dégagée, qui permet une mobilité radiale de l'élément étanche (17) par rapport au boîtier d'étanchéité (25).

15. Vanne selon l'une quelconque des revendications 1 à 14, **caractérisée en ce qu'**au moins une, et de manière appropriée seulement une des deux branches de de boîtier (28) du boîtier d'étanchéité (25), est réalisée sous la forme d'une branche de guidage (28a), laquelle dispose d'au moins une face de guidage (42) pointant radialement vers l'intérieur, laquelle entraîne, du fait du contact direct avec la face périphérique extérieure (14) du coulisseau de vanne (8), indépendamment de l'élément étanche (17) associé, un support transversal et un guidage par coulissement linéaire du coulisseau de vanne (8).
